# EUROPÄISCHE PATENTANMELDUNG

(11) **EP 0 593 947 A1**
(43) Veröffentlichungstag der Anmeldung: **27.04.1994**
(21) Anmeldenummer: 93115592.3
(22) Anmeldetag: 28.09.1993
(51) Int. Cl.: H04B 10/06

(54) **Optischer Empfänger mit Frequenzweiche**

(30) Priorität: 20.10.1992 DE 4235321
(71) Anmelder: Alcatel SEL Aktiengesellschaft, D-70435 Stuttgart (DE)
(72) Erfinder: Braun, Klaus, D-70435 Stuttgart (DE); Steigenberger, Ulrich, D-70565 Stuttgart (DE)
(74) Vertreter: Kugler, Hermann, Dipl.-Phys.

(57) **Zusammenfassung**

Bei der optischen Übertragung eines analogen Signals hoher Bandbreite (z.B. CATV) im Bereich von z.B. (47-860)MHz besteht die Absicht, im Bereich von (≈0-30)MHz einen zusätzlichen Dienst, dessen Signal eine geringe Bandbreite (z.B. ein Digitalsignal) einnimmt, anzubieten.

Die empfangsseitige Trennung des Frequenzbandes von (0-860)MHz in ein erstes Frequenzband (FB₁) von (≈0-30)MHz und in ein zweites Frequenzband (FB₂) von (47-860)MHz erfolgt durch einen optischen Empfänger (4) mit Frequenzweiche.

Ein von einer Photodiode 3 kommender Photostrom durchfließt einen ersten Schaltungsteil 1 und einen zweiten Schaltungsteil 2. Mit dem ersten Schaltungsteil 1 wird das erste Frequenzband (FB₁) und mit dem zweiten Schaltungsteil 2 das zweite Frequenzband (FB₂) abgetrennt.

## Beschreibung

Die Erfindung betrifft einen optischen Empfänger gemäß dem Oberbegriff des Patentanspruchs 1.

Solche optische Empfänger sind z.B. bekannt aus: Lutzke, D., Lichtwellenleitertechnik, Pflaum Verlag München 1986, Seiten 279 bis 289.

Die in solchen Empfängern enthaltenen Verstärker sind vorzugsweise sogenannte Transimpedanzverstärker, da sie für Signale mit einer hohen Bandbreite und einem großen Dynamikbereich geeignet sind. Von Nachteil für die analoge Signalübertragung ist allerdings, daß sie Nichtlinearitäten und schlechte Klirreigenschaften aufweisen. Für die digitale Signalübertragung, bei der die Anforderungen an die Linearität und die Klirreigenschaften geringer sind, sind die Transimpedanzverstärker jedoch gut geeignet.

Ein alternatives Empfängerkonzept für die analoge Signalübertragung ist in der EP 0 372 742 A2 angegeben. Dieses Konzept verwendet eine Photodiode, einen Übertrager und einen Verstärker als optischen Empfänger für Signale einer großen Bandbreite bis in den UHF-Bereich. Photodiode und Übertrager sind in Serie.

In manchen optischen Übertragungssystemen ist die gleichzeitige Übertragung eines analogen Signals mit einer hohen Bandbreite, z.B. für ein Kabelfernsehsignal, und eines Signals mit einer schmalen Bandbreite, z.B. ein Digitalsignal, gewünscht.

Ein Kabelfernsehsignal wird im folgenden als breitbandiges Signal, abgekürzt als BB-Signal, bezeichnet und ein Digitalsignal als schmalbandiges Signal, abgekürzt SB-Signal. Die Übertragung dieser Signale soll gleichzeitig über einen gemeinsamen Lichtwellenleiter erfolgen.

Aus EP-A2-0 386 482 ist ein optisches Übertragungssystem mit einem optischen Empfänger und nachfolgender Frequenzweiche im Prinzip bekannt.

In diesem System ist ein optischer Empfänger bekannter Art vorgesehen. Ein optisches Eingangssignal des optischen Empfängers wird in ein elektrisches Signal gewandelt. In einer dem optischen Empfänger nachgeschalteten Frequenzweiche wird das elektrische Signal, das Fernseh- und Fernsprechsignale enthält, in seine zwei Signalanteile getrennt.

Es ist eine Aufgabe der Erfindung, einen anderen optischen Empfänger für schmalbandige und breitbandige Signale anzugeben. Die Aufgabe wird wie in Anspruch 1 angegeben gelöst. Weiterbildungen ergeben sich aus den Unteransprüchen.

Ein Vorteil der Erfindung ist, daß jedes Signal mit dem für sich günstigsten Empfangskonzept empfangen wird. Daraus folgt, daß jede Schaltung für sich optimiert werden kann. Eine Optimierung kann z.B. hinsichtlich der Empfindlichkeit erfolgen.

Die Erfindung wird nun anhand der Zeichnungen näher erläutert. Es zeigen:
- Fig. 1: ein Prinzipschaltbild des erfindungsgemäßen optischen Empfängers 4,
- Fig. 2: ein Ausführungsbeispiel eines ersten Schaltungsteils 1,
- Fig. 3: ein Ausführungsbeispiel eines zweiten Schaltungsteils 2,
- Fig. 4: ein erstes Ausführungsbeispiel des optischen Empfängers 4.
- Fig. 5: ein zweites Ausführungsbeispiel des optischen Empfängers 4, und
- Fig. 6: ein drittes Ausführungsbeispiel des optischen Empfängers 4.

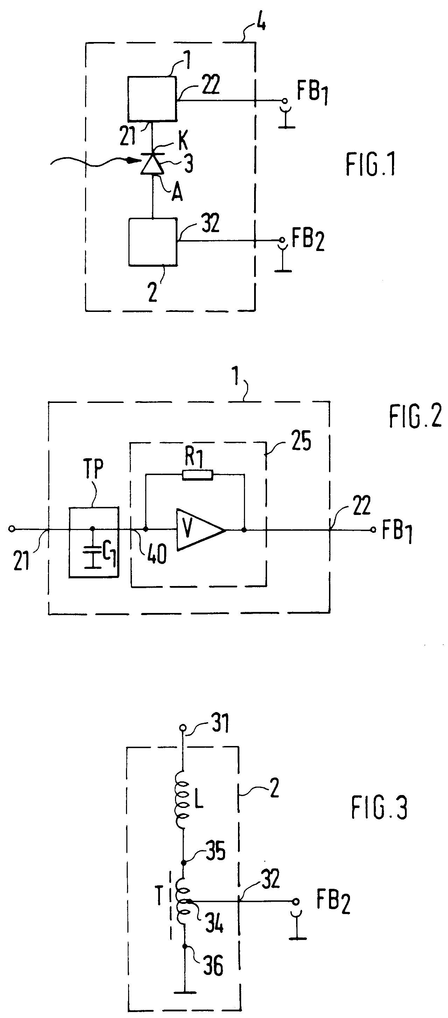

In Fig. 1 ist ein Prinzipschaltbild eines optischen Empfängers 4 gezeigt. Er enthält eine Photodiode 3, einen ersten Schaltungsteil 1 und einen zweiten Schaltungsteil 2. Der erste Schaltungsteil 1 hat einen Ausgang 22, an dem ein erstes Frequenzband FB₁ zur Verfügung steht. An einem Ausgang 32 des zweiten Schaltungsteils 2 steht ein zweites Frequenzband FB₂ zur Verfügung.

Die Photodiode, die einen zur einfallenden Lichtleistung proportionalen Photostrom liefert, hat einen ersten Pol K und einen zweiten Pol A. In Frage kommt z.B. eine PIN-Photodiode oder eine Avalanche Photodiode (APD). Letztere hat eine stromverstärkende Wirkung.

In dem hier gezeigten Prinzipschaltbild ist der erste Schaltungsteil 1 mit dem ersten Pol K und der zweite Schaltungsteil 2 mit dem zweiten Pol A der Photodiode verbunden.

Der Grundgedanke der Erfindung ist, daß in dem Photostrom die ganze Information steckt und sich daraus die einzelnen Signale abtrennen lassen, bevor sie verstärkt werden. Mit dem Schaltungsteil 1 läßt sich ein erstes Frequenzband FB₁ und mit dem zweiten Schaltungsteil 2 ein zweites Frequenzband FB₂ abtrennen, und so ein im ersten Frequenzband FB₁ liegendes schmalbandiges Digitalsignal und ein im zweiten Frequenzband FB₂ liegendes Breitband-Analogsignal aus dem empfangenen Signal herausfiltern.

Die Schaltungsteile sind demzufolge so anzuordnen, daß sie vom ganzen Photostrom durchflossen werden.

Weitere Anordnungsbeispiele sind:
- Der zweite Schaltungsteil 2 ist mit dem ersten Pol K der Photodiode verbunden und der erste Schaltungsteil 1 mit dem zweiten Pol A.
- Der erste Schaltungsteil 1 ist mit dem zweiten Schaltungsteil 2 verbunden und einer der beiden Schaltungsteile (1 oder 2) ist mit dem ersten oder zweiten Pol (K oder A) verbunden.

In Fig. 2 ist ein Ausführungsbeispiel des ersten Schaltungsteils 1 gezeigt. Er enthält als Tiefpaßfilter TP einen Kondensator C₁, einen Verstärker V und einen Rückkoppelwiderstand R₁. Der Verstärker V mit dem Widerstand R₁ ist vorzugsweise als Transimpedanzverstärker 25 ausgebildet, es ist aber auch ein anderes Verstärkerkonzept, z.B. ein low-impedance-Verstärker, möglich. Der Schaltungsteil 1 hat einen Eingang 21 und einen Ausgang 22, der gleichzeitig ein Ausgang des Transimpedanzverstärkers ist. Der Transimpedanzverstärker hat einen Eingang 40.

Am Eingang 21 liegt der Kondensator C₁ gegen Masse. Eine Spannungsversorgung des Verstärkers ist, wie auch in den übrigen Figuren, nicht eingezeichnet. Der Kondensator C₁ wirkt hier für das SB-Signal als Tiefpaßfilter. Seine Grenzfrequenz wird so gewählt, daß er das erste Frequenzband FB₁ abtrennt. Für das BB-Signal stellt er einen Kurzschluß dar.

Anstelle dieses Filters 1. Ordnung kann auch ein Filter höherer Ordnung eingesetzt werden. Eine eventuell notwendige weitere Bandbegrenzung des SB-Signals kann z.B. nach dem Transimpedanzverstärker erfolgen.

Ein Ausführungsbeispiel des zweiten Schaltungsteils 2 ist in Fig. 3 gezeigt. Er enthält eine Induktivität L und einen Übertrager T, der hier z.B. als Spartransformator gezeichnet ist. Der Schaltungsteil 2 hat einen Eingang 31, der mit einem ersten Anschluß der Induktivität L verbunden ist und einen Ausgang 32, der mit einem Sekundärabgriff 34 des Übertragers T verbunden ist.

Ein erster primärseitiger Anschluß 35 des Übertragers ist mit einem zweiten Anschluß der Induktivität L verbunden und ein zweiter primärseitiger Anschluß 36 liegt auf Masse.

Der Schaltungsteil 2 enthält mindestens einen Übertrager T, der so geschaltet ist, daß der ihn enthaltende Schaltungsteil 2 für die empfangenen Signale eine Bandpaß-Filterfunktion hat.

Ein Übertrager hat prinzipiell eine Bandpaß-Filterfunktion, dessen untere Grenzfrequenz z.B. von der Windungszahl und dem A_{L}-Wert abhängig ist und durch Ändern dieser Parameter festgelegt wird.

Ein Übertrager übersetzt einen primärseitigen Strom entsprechend dem Übersetzungsverhältnis in einen sekundärseitigen Strom. Der Photostrom wird dadurch verstärkt, so daß kein weiterer Verstärker notwendig ist.

Mit der Induktivität L kann der Frequenzgang des Schaltungsteils 2 beeinflußt werden.

Mit dem Schaltungsteil 2 kann das zweite Frequenzband FB₂ abgetrennt werden.

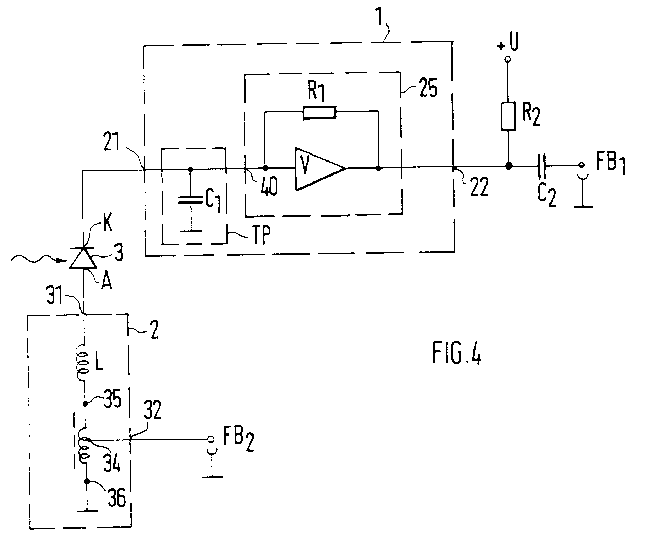

Ein erstes Ausführungsbeispiel des erfindungsgemäßen optischen Empfängers ist in Fig. 4 gezeigt; es entspricht der Prinzipschaltung aus Fig. 1. Die beiden Schaltungsteile 1,2 sind angedeutet und die Bezugszeichen entsprechen denen der vorangehenden Figuren.

Eine positive Gleichspannungsversorgung des optischen Empfängers erfolgt über einen Widerstand R₂, der mit dem Ausgang 22 des ersten Schaltungsteils 1 verbunden ist. Ein Längskondensator C₂, der ebenfalls mit dem Ausgang 22 verbunden ist, wirkt als Koppelkondensator.

Durch die positive Gleichspannung am Eingang 21 wird die Photodiode 3 in Sperrpolung betrieben.

Hinsichtlich der Gleichspannungsversorgung der Photodiode sind folgende Anmerkungen zu machen:
Alternativ zu der obengenannten Spannungsversorgung über den Eingang 21 ist es auch möglich, den ersten Anschluß K der Photodiode 3 über einen Widerstand oder eine Induktivität mit der Gleichspannungsversorgung zu verbinden. In diesem Fall ist ein Längskondensator vor dem Transimpedanzverstärker 25 einzufügen, um den Gleichanteil zu sperren.

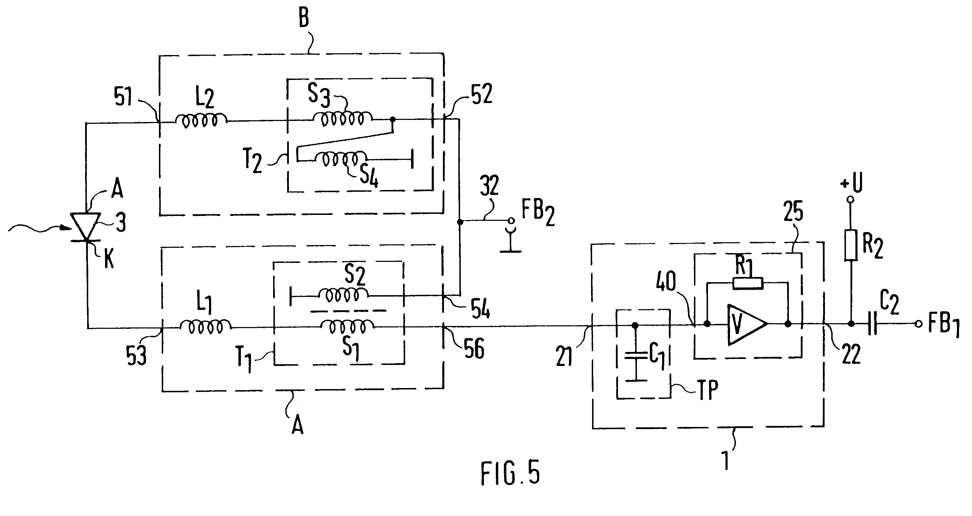

Ein zweites Ausführungsbeispiel eines erfindungsgemäßen optischen Empfängers ist in Fig. 5 gezeigt.

Abweichend von den bisherigen Figuren ist, daß das Schaltungsteil 2 aufgeteilt ist in einen ersten Teilblock A und einen zweiten Teilblock B. Unabhängig von der Aufteilung bleibt der Grundgedanke der Erfindung bestehen, da auch hier der ganze Photostrom die einzelnen Schaltungsteile durchfließt. Der erste Teilblock A enthält eine Induktivität L₁ und einen Übertrager T₁ und hat einen Eingang 53, einen ersten Ausgang 56 und einen zweiten Ausgang 54. Der zweite Teilblock B enthält eine Induktivität L₂ und einen Übertrager T₂ und hat einen Eingang 51 und einen Ausgang 52. Der Übertrager T₁ enthält eine erste Übertragerwicklung S₁ und eine zweite Übertragerwicklung S₂. Die erste Übertragerwicklung S₁ ist mit der Induktivität L₁ und dem Ausgang 56 des Teilblocks A verbunden. Die zweite Übertragerwicklung S₂ liegt mit einem Ende auf Masse und mit dem anderen Ende ist sie mit dem Ausgang 54 des Teilblockes A verbunden.

Ein Ende der Induktivität L₁ ist mit dem Eingang 53 des Teilblocks A und dieser mit dem ersten Pol K der Photodiode verbunden.

Der Übertrager T₂ des Teilblocks B ist z.B. als sogenannter Ruthroff-Übertrager ausgebildet und weist zwei Übertragerwicklungen S₃ und S₄ auf, die in Reihe geschaltet sind. Dabei ist ein Ende der Übertragerwicklung S₃ mit der Induktivität L₂ verbunden, das andere Ende der Übertragerwicklung S₄ und dem Ausgang 52 des zweiten Teilblocks B verbunden. Das zweite Ende der Übertragerwicklung S₄ liegt auf Masse. Die beiden Übertragerwicklungen S₃ und S₄ sind über einen Kern magnetisch gekoppelt und gleichsinnig gewickelt.

Die Induktivität L₂ ist mit einem anderen Ende mit dem Eingang 51 des Teilblocks B und dieser mit dem zweiten Pol A der Photodiode verbunden.

Der Ausgang 56 des ersten Teilblocks A ist mit dem Eingang 21 des ersten Schaltungsteils 1 verbunden. Nach dem Schaltungsteil 1 steht das erste Frequenzband FB₁ zur Verfügung.

Die Spannungsversorgung erfolgt wie in Zusammenhang mit Fig. 4 beschrieben.

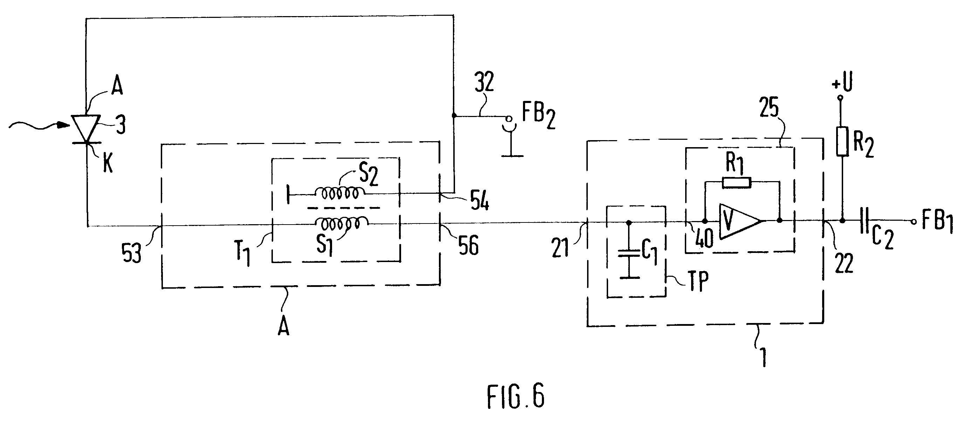

Ein drittes Ausführungsbeispiel ist in Fig. 6 gezeigt. Es stellt eine Vereinfachung des Beispiels aus Fig. 5 dar; der Teilblock B wird durch eine durchgehende Verbindung ersetzt. Die Induktivität L₁ und der Übertrager T₂ entfällt. Alles weitere ist identisch mit Fig. 5.

Auch in den Figuren 5 und 6 sind die in den Teilblöcken A und B enthaltenen Übertrager so geschaltet, daß sie für die empfangenen Signale eine Bandpaß-Filterfunktion haben.

Der optische Empfänger ist für den Empfang von analogen Signalen mit einer Bandbreite von (40-860)MHz und z.B. für digitale Signale mit einer Bandbreite von (≈0-30)MHz vorgesehen, aber nicht auf diesen Frequenzbereich beschränkt.

## Patentansprüche

1. Optischer Empfänger (4) zum Empfang von Signalen, die ein breites Frequenzband belegen, der eine einen Photostrom erzeugende Photodiode (3) mit einem ersten Pol (K) und einem zweiten Pol (A) und einen Verstärker enthält,
**dadurch gekennzeichnet,** daß der Photostrom einen ersten Schaltungsteil (1), der den Verstärker enthält, und einen zweiten Schaltungsteil (2) durchfließt, und daß mit dem ersten Schaltungsteil (1) ein erstes Frequenzband (FB₁) und mit dem zweiten Schaltungsteil (2) ein zweites Frequenzband (FB₂) aus dem breiten Frequenzband der empfangenen Signale abtrennbar ist.

2. Optischer Empfänger nach Anspruch 1, dadurch gekennzeichnet,
daß der erste Schaltungsteil (1) ein Tiefpaßfilter (TP) enthält und daß der zweite Schaltungsteil (2) mindestens einen Übertrager (T) enthält, der so geschaltet ist, daß der ihn enthaltende Schaltungsteil für die empfangenen Signale eine Bandpaß-Filterfunktion hat.

3. Optischer Empfänger nach Anspruch 1, dadurch gekennzeichnet,
daß der erste Schaltungsteil (1) mit dem ersten Pol (K) der Photodiode (3) verbunden ist, und daß der zweite Schaltungsteil (2) mit dem zweiten Pol (A) der Photodiode (3) verbunden ist.

4. Optischer Empfänger nach Anspruch 1, dadurch gekennzeichnet,
daß der zweite Schaltungsteil (2) mit dem ersten Pol (K) der Photodiode (3) verbunden ist, und daß der erste Schaltungsteil (1) mit dem zweiten Pol (A) der Photodiode (3) verbunden ist.

5. Optischer Empfänger nach Anspruch 1, dadurch gekennzeichnet,
daß der erste Schaltungsteil (1) mit dem zweiten Schaltungsteil (2) verbunden ist und daß einer der beiden Schaltungsteile mit dem ersten Pol (K) oder mit dem zweiten Pol (A) der Photodiode (3) verbunden ist.

6. Optischer Empfänger nach Anspruch 1 oder 2, dadurch gekennzeichnet,
daß der zweite Schaltungsteil (A, B) aufgeteilt ist in einen ersten Teilblock (A) und in einen zweiten Teilblock (B), und daß mindestens einer (T₁) der in den Teilblöcken enthaltenen Übertrager (T₁, T₂) eine an den ersten Pol (K) der Photodiode (3) angeschlossene erste Übertragerwicklung (S₁) und eine an den zweiten Pol (A) der Photodiode (3) angeschlossene zweite Übertragerwicklung (S₂) hat, und daß in jedem Teilblock der Übertrager so geschaltet ist, daß der zweite Schaltungsteil (A, B) für die empfangenen Signale eine Bandpaß-Filterfunktion hat. (Fig. 5)

7. Optischer Empfänger nach Anspruch 6, dadurch gekennzeichnet,
daß der im Teilblock B enthaltene Übertrager (T₂) eine erste (S₃) und eine zweite Übertragerwicklung (S₄) enthält, die in Serie geschaltet sind, und daß die erste Übertragerwicklung (S₃) mit dem zweiten Pol (A) der Photodiode (3) und mit der ersten Übertragerwicklung (S₂) des im ersten Teilblock (A) enthaltenen Übertragers (T₁) verbunden ist.

8. Optischer Empfänger nach Anspruch 1 oder 2, dadurch gekennzeichnet,
daß der in dem zweiten Schaltungsteil (2) enthaltene Übertrager (T₁) eine an den ersten Pol (K) der Photodiode (3) angeschlossene erste Übertragerwicklung (S₁) und eine an den zweiten Pol (A) der Photodiode (3) angeschlossene zweite Übertragerwicklung (S₂) hat, so geschaltet ist, daß der zweite Schaltungsteil (2) für die empfangenen Signale eine Bandpaß-Filterfunktion hat. (Fig. 6).
